(19) Europäisches Patentamt
European Patent Office
Office européen des brevets

(11) **EP 3 770 825 B1**

(12) **EUROPEAN PATENT SPECIFICATION**

(45) Date of publication and mention
of the grant of the patent:
**19.11.2025 Bulletin 2025/47**

(21) Application number: **19800295.8**

(22) Date of filing: **04.01.2019**

(51) International Patent Classification (IPC):
**G06N 3/063** (2023.01)     **G06N 3/08** (2023.01)
**G06N 3/045** (2023.01)

(52) Cooperative Patent Classification (CPC):
**G06N 3/08; G06N 3/0442; G06N 3/045;
G06N 3/0464; G06N 3/0495; G06N 3/063;
G06N 3/09**

(86) International application number:
**PCT/KR2019/000142**

(87) International publication number:
**WO 2019/216515 (14.11.2019 Gazette 2019/46)**

(54) **ELECTRONIC DEVICE AND CONTROL METHOD THEREOF**

ELEKTRONISCHE VORRICHTUNG UND STEUERUNGSVERFAHREN DAFÜR

DISPOSITIF ÉLECTRONIQUE ET SON PROCÉDÉ DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.05.2018 KR 20180053185**

(43) Date of publication of application:
**27.01.2021 Bulletin 2021/04**

(73) Proprietor: **Samsung Electronics Co., Ltd.
Gyeonggi-do 16677 (KR)**

(72) Inventors:
• **LEE, Dongsoo**
  Suwon-si Gyeonggi-do 16677 (KR)
• **KIM, Byeoungwook**
  Suwon-si Gyeonggi-do 16677 (KR)
• **SON, Kwanghoon**
  Suwon-si Gyeonggi-do 16677 (KR)
• **LEE, Jonghun**
  Suwon-si Gyeonggi-do 16677 (KR)

(74) Representative: **Appleyard Lees IP LLP
15 Clare Road
Halifax HX1 2HY (GB)**

(56) References cited:
KR-A- 20060 027 795      KR-A- 20160 034 814
KR-A- 20180 043 154      KR-B1- 100 248 072
KR-B1- 100 790 900

• ZHOU SHUCHANG ET AL: "IQNN: Training
Quantized Neural Networks with Iterative
Optimizations", 25 October 2017, ICIAP:
INTERNATIONAL CONFERENCE ON IMAGE
ANALYSIS AND PROCESSING, 17TH
INTERNATIONAL CONFERENCE, NAPLES,
ITALY, SEPTEMBER 9-13, 2013. PROCEEDINGS;
[LECTURE NOTES IN COMPUTER SCIENCE;
LECT.NOTES COMPUTER], SPRINGER, BERLIN,
HEIDELBERG, PAGE(S) 688 - 6, ISBN:
978-3-642-17318-9, XP047451810
• JI ZHENGPING ET AL: "Reducing weight
precision of convolutional neural networks
towards large-scale on-chip image recognition",
PROCEEDINGS OF SPIE, IEEE, US, vol. 9496, 20
May 2015 (2015-05-20), pages 94960A - 94960A,
XP060055095, ISBN: 978-1-62841-730-2, DOI:
10.1117/12.2176598
• PILIPOVIC RATKO ET AL: "Compression of
convolutional neural networks: A short survey",
2018 17TH INTERNATIONAL SYMPOSIUM
INFOTEH-JAHORINA (INFOTEH), IEEE, 21 March
2018 (2018-03-21), pages 1 - 6, XP033335103,
DOI: 10.1109/INFOTEH.2018.8345545

- **HAO LI ET AL: "Towards a Deeper Understanding of Training Quantized Neural Networks", 1 August 2017 (2017-08-01), XP055590849, Retrieved from the Internet <URL:https://www. padl.ws/papers/Paper%2016.pdf> [retrieved on 20190522]**

## Description

## Technical Field

This disclosure relates to an electronic apparatus and a controlling method thereof and, more particularly to, an electronic apparatus which operates based on artificial intelligence (AI) technology and a controlling method thereof.

## Background Art

Recently, an AI system that implements human-level intelligence has been developed. The artificial intelligence system is a system that the machine learns and determines by itself, unlike the existing rule-based smart system, and is used in various fields such as speech recognition, image recognition and future prediction.

In recent years, AI systems have been developed that solve a given problem through a deep neural network based on deep learning.

A deeper neural network is a neural network that includes multiple hidden layers between the input and output layers. It is a model that implements artificial intelligence technology through neurons contained in each layer.

It is general that the deep neural network includes a plurality of neurons in order to deduce an accurate result value.

However, when there is a large amount of neurons, accuracy of the output value with respect to the input value is increased, but there is a problem that the time for deriving the output value is delayed.

Also, due to the vast amount of neurons, deep neural networks cannot be used due to a capacity problem in mobile devices such as smart phones with limited memory.

Zhou Shuchang et. al: "IQNN: Training Quantized Neural Networks with Iterative Optimizations", 25 October 2017, describes a quantization algorithm iteratively solving for a scaling factor. Ji Zhengping et. al: "Reducing weight precision of convolutional neural networks towards large-scale on-chip image recognition", 20 May 2015, describes a reducing bit resolution of deep learning architecture. Pilipovic Ratko et. al: "Compression of convolutional neural networks: A short survey", 21 March 2018, and Hao Li et. al: "Towards a Deeper Understanding of Training Quantized Neural Networks", 1 August 2017, are also background art.

## Disclosure

## Technical Problem

The disclosure has been made to solve the above-described problems, and an object of the disclosure is to provide an electronic apparatus capable of accurately deriving an output value for an input value within a short time by lightening an artificial intelligence model without performance degradation, and realizing artificial intelligence technology even in a mobile device having limited memory.

## Technical Solution

Features of the present invention are set out in the appended claims.

## Effect of Invention

According to various embodiments as described above, by lightening an artificial intelligence (AI) model without performance degradation, an output value for an input value may be accurately derived within a short time, and artificial intelligence technology may be realized even in a mobile device having limited memory, or the like.

## Description of Drawings

FIG. 1 is a block diagram illustrating an electronic apparatus according to an embodiment;

FIG. 2 is a diagram illustrating a method of quantizing trained connection strengths by an electronic apparatus according to an embodiment;

FIG. 3 is a diagram illustrating an embodiment of iterative quantization operation by an electronic apparatus according to an embodiment;

FIGS. 4 and 5 are tables showing that an accuracy of connection strength increases by iterative quantization operation by an electronic apparatus according to an embodiment; and

FIG. 6 is a flowchart illustrating a method for controlling of an electronic apparatus according to an embodiment.

## Best Mode for Carrying out the Invention

[0013]    -

## Detailed Description of Embodiments

The terms used in the present specification and the claims are general terms identified in consideration of the functions of the various embodiments of the disclosure. However, these terms may vary depending on intention, legal or technical interpretation, emergence of new technologies, and the like of those skilled in the related art. Also, there may be some terms arbitrarily identified by an applicant. Unless there is a specific definition of a term, the term may be construed based on the overall contents and technological common sense of those skilled in the related art.

A detailed description of conventional techniques related to the disclosure that may unnecessarily obscure the gist of the disclosure will be shortened or omitted.

Embodiments of the disclosure will be described in detail with reference to the accompanying drawings, but the disclosure is not limited to embodiments described herein.

Hereinbelow, the disclosure will be described in greater detail with reference to the drawings attached hereto.

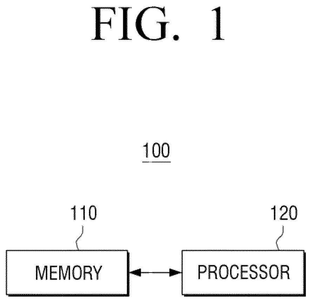

FIG. 1 is a block diagram illustrating an electronic apparatus according to an embodiment. As illustrated in FIG. 1, an electronic apparatus 100 includes a memory 110 and a processor 120.

The electronic apparatus 100 may be an apparatus that obtains output data for input data based on an artificial intelligence model. For example, the electronic apparatus 100 may be a desktop PC, a notebook, a smart phone, a tablet PC, a server, and the like. Alternatively, the electronic apparatus 100 may be the system itself in which the cloud computing environment is built. However, the disclosure is not limited thereto, and the electronic apparatus 100 may be any apparatus as long as the apparatus can be operated using an artificial intelligence model.

The memory 110 is provided separately from the processor 120 and can be implemented as a hard disk, non-volatile memory, volatile memory, or the like.

The memory 110 may store an artificial intelligence model. Here, the artificial intelligence model can be trained through artificial intelligence algorithms. For example, the AI model may be a deep neural network model.

Specifically, the artificial intelligence model may be a Recurrent Neural Network (RNN) trained model. Here, RNN means a cyclic neural network, and is a type of deep learning model for learning data that changes with time, such as time series data.

However, the present disclosure is not limited thereto, and the artificial intelligence model may be a Convolutional Neural Network (CNN) trained model. Alternatively, the memory 110 may store a model generated based on a rule rather than a model trained through an artificial intelligence algorithm, and there is no particular limitation on the model stored in the memory 110.

Deep neural network may include a plurality of layers and each of the layers may include a plurality of neurons.

To be specific, deep neural network may include a plurality of hidden layers between the input layer and the output layer.

Neurons of neighboring layers may be connected by synapses. According to training, connection strength, that is weight, can be assigned to synapses.

The processor 120 generally controls the operation of electronic apparatus 100. To that end, the processor 120 may include one or more of a central processing unit (CPU), an application processor (AP), or a communication processor (CP).

The processor 120 may lighten neural network which is trained based on deep learning.

In general, deep neural network includes a plurality of neurons to derive an accurate result value.

However, when a large amount of neurons is present, the accuracy of the output value with respect to the input value increases, but the time for deriving the output value is delayed, causing a problem.

Also, due to the large amount of neurons, there is a problem that the deep neural network cannot be used due to a capacity problem in a mobile device such as a smart phone having a limited memory.

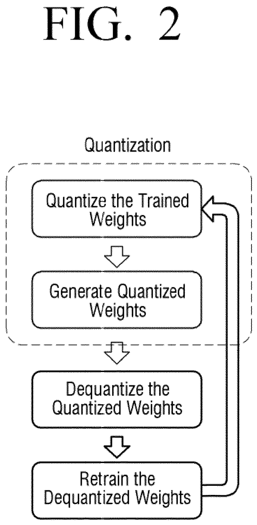

To solve such a problem, the processor 120 can lighten the trained neural network based on the deep learning. Hereinafter, description will be made with reference to FIG. 2.

FIG. 2 is a diagram illustrating a method of quantizing trained connection strengths by an electronic apparatus according to an embodiment.

The processor 120 may lighten the neural network by quantizing the trained connection strength between the neurons of the neural network. Specifically, the processor 120 may lighten the neural network by quantizing the trained connection strength between neurons of the trained neural network in a preset first bit unit.

Here, the trained connection strength is 32 bits, and the preset first bit can be a bit of a smaller unit. For example, the preset first bit may be one bit.

The quantization can be performed through the Greedy approximation technique. Specifically, the processor 120 may quantize the trained connection strength by using a preset first bit unit using Equation 1. Hereinafter, for the sake of convenience of description, it is assumed that the preset first bit unit is one (1) bit.

[Equation 1]

$$\min_{\{a_i,b_i\}_{i=1}^{k}} \left\| w - \sum_{i=1}^{k} a_i b_i \right\|^2$$

Here, w indicates connection strength, a indicates optimal coefficient, b is -1 or +1, and k may be integer greater than 1.

If $w - \sum_{j=1}^{i-1} \alpha_j b_j$ of Equation 1 is substituted with $r_{i-1}$, a and b of Equation 1 can be expressed as the equation shown below.

$$a_i = \frac{1}{n}\|r_{i-1}\|_1 \quad \text{and} \quad b_i = \text{sign}(r_{i-1}).$$

For example, if the trained connection strength is represented by a matrix such as [1.1, - 0.9, 0.7, -0.5], the processor 120 may calculate that a is 0.8 by using the Equation of (1.1 + 0.9 + 0.7 + 0.5) / 4.

The processor 120 can quantize the trained connection strengths [1.1, -0.9, 0.7, -0.5] as [0.8] * [1, -1, 1, -1].

The processor 120 may quantize [0.8] * [1, -1, 1, -1] quantized through the residue method to obtain quantized connection strength with a high degree of matching with the trained connection strength, and express the quantized matrix by adding the matrix to existing [0.8] * [1, -1, 1, -1] using the residue method.

That is, given that a is 0.8, the processor 120 may calculate that a is 0.2 through the equation (0.3 + 0.1 + 0.1 + 0.3) / 4 by applying the residue method to the connection strengths [1.1, - 0.9, 0.7, -0.5].

The processor 120 may express the trained connection strengths [1.1, -0.9, 0.7, -0.5] to [0.8] * [1, -1, 1, -1] + [0.2] * [1, -1, -1, 1] by quantizing.

Through the iterative quantization operation, the processor 120 can express the trained connection strength as a quantized connection strength.

As such, by quantizing the trained connection strength, the electronic apparatus 100 according to one embodiment can lighten the weight of the neural network.

Meanwhile, an embodiment of quantization using the Greedy approximation technique is described herein, but there is no particular limitation on a method of quantizing the trained connection strength. For example, the quantization may be performed in various ways, such as unitary quantization, adaptive quantization, uniform quantization, or supervised iterative quantization.

The processor 120 may dequantize the connection strength quantized in the preset first bit unit in a preset second bit unit. Here, the preset second bit unit may be the same unit as the bit unit of the connection strength before being quantized. That is, when the connection strengths [1.1, -0.9, 0.7, -0.5] trained in the above embodiment are 32 bits, the dequantized connection strength can also be 32 bits.

In the meantime, dequantization can be performed using Equation 2 as shown below.

[Equation 2]

$$\sum_{i=1}^{k} a_i b_i$$

Here, a is an optimal coefficient, b is -1 or +1, and k may be an integer which is greater than 1.

For example, as in the above embodiment, if the trained connection strengths [1.1, -0.9, 0.7, -0.5] are quantized as [0.8] * [1, -1, 1, -1] + [0.2]*[1, -1, -1, 1], the processor 120 can dequantize the quantized connection strength to [1.0, -1.0, 0.6, -0.6]..

The processor 120 may retrain the dequantized connection strength, and quantize the retrained connection strength using Equation 1 described above.

Here, the method of quantizing the retrained connection strength is the same as the method of quantizing the trained connection strength described above, so a detailed description thereof will be omitted.

Thus, by retraining the dequantized connection strength and re-quantizing the retrained connection strength, the processor 120 can acquire a quantized connection strength having a high degree of matching with the existing connection strength.

That is, the electronic apparatus 100 according to an embodiment not only quantizes the trained connection strength, but also dequantizes the quantized connection strength, retrains the dequantized connection strength, and re-qunantizes the retrained connection strength, to obtain connection strength with high degree of matching with the existing connection strength and lighten the weight of the neural network at the same time.

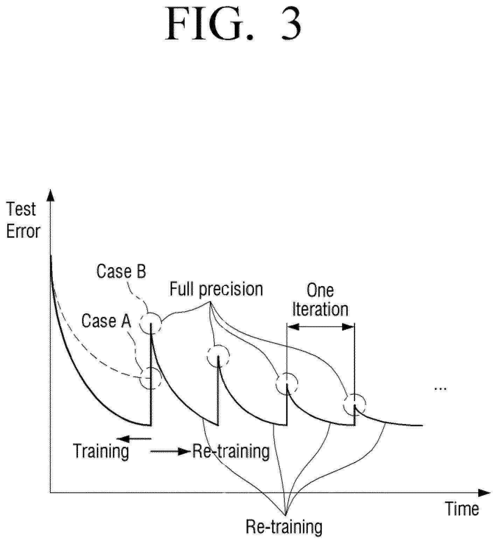

FIG. 3 is a diagram illustrating an embodiment of iterative quantization operation by an electronic apparatus according to an embodiment.

Referring to FIG. 3, as for a related-art electronic apparatus, connection strength is quantized by a method of case A or case B to lighten the neural network.

The case A is a method of performing quantization of the connection strength in the learning process, and, if quantization is performed using this method, as illustrated in FIG. 3, there is an advantage to lower a test error rate to a certain degree compared to case B. Here, the test error rate may be a difference between the connection strength obtained by training and the quantized connection strength.

By the case A, however, the training process is very complicated and time for training is excessively lengthened.

The case B is a method of performing quantization of connection strength after finishing the training process and when the quantization is performed by this method, there is a problem that the test error rate increases.

To solve the above-described problems, the processor 120 may iteratively perform dequantization, retraining, and new quantization after quantization iteratively in preset time units.

Referring to FIG. 3, after the first training process is finished, the processor 120 may quantize the connection strength, dequantize the same to full precision, and retrain the dequantized connection strength.

If the first trained connection strength is 32 bits, full precision may be composed of 32 bits as well.

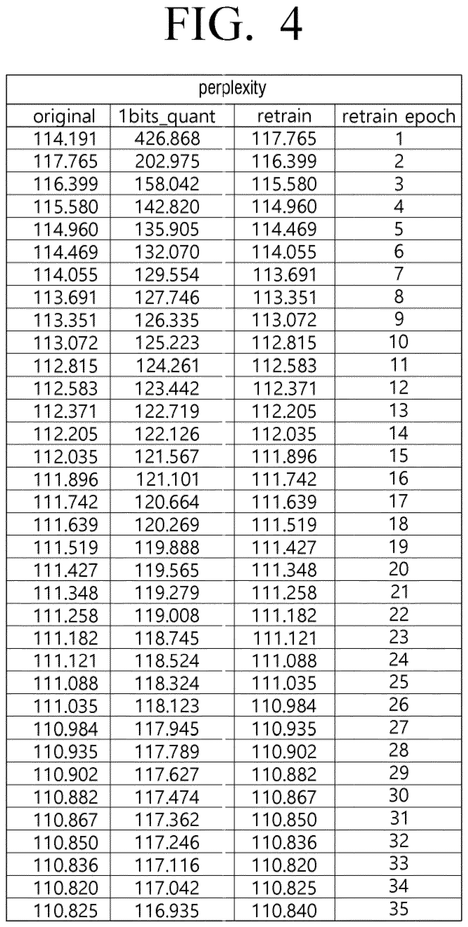

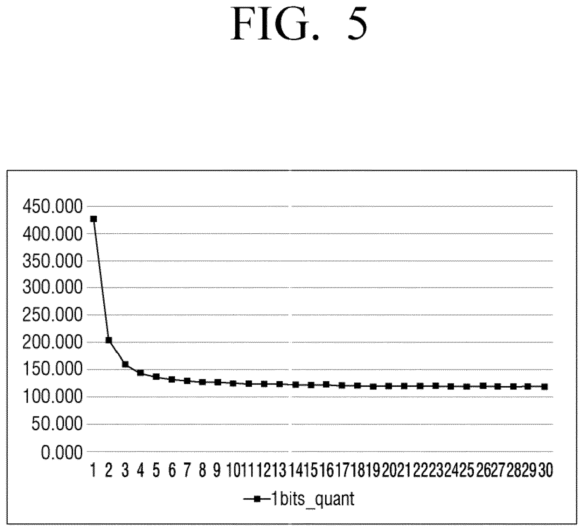

As illustrated in FIG. 3, by iterating the dequantization after quantization, the retraining, and the new quantization process in a preset time unit, the test error rate may be continuously decreased. The specific numeral values are described below with reference to FIGS. 4 and 5.

If the accuracy when the connection strength is quantized after retraining is within a preset range from the accuracy of the first trained connection strength, the iterative operation as described above may be stopped.

The processor 120 may calculate the accuracy of the first trained connection strength, that is, the test error as described above.

The processor 120 may iteratively perform dequantization, retraining, and quantization, and may calculate an accuracy when the retrained connection strength is quantized in a preset first bit unit.

The preset range may be set to 3%, but the numeral value is not limited to a specific range.

The processor 120 may perform the retraining with an epoch in which the accuracy of the retrained connection strength falls within a preset range from the accuracy of the trained connection strength.

The processor 120 may calculate the accuracy of the trained connection strength and the accuracy of the retrained connection strength.

FIGS. 4 and 5 are tables showing that an accuracy of connection strength increases by iterative quantization operation by an electronic apparatus according to an embodiment.

Referring to FIG. 4, original denotes an error rate of a trained connection strength, retrain denotes an error rate of a retrained connection strength, 1 bit_quant denotes an error rate of a connection strength quantized to 1 bit, and a retrain epoch denotes that dequantization, retraining, and a quantization is considered to be one interval.

Referring to FIG. 4, when the error rate of the trained connection strength is 114.191, the error rate is 426.868 when quantized, and the error rate of the retrained connection strength is 117.765.

When quantized again, the error rate is 202.975 and the error rate of the retrained connection strength is 116.399.

After iteration, in the 35th epoch, the error rate is 116.935, and the error rate of the retrained connection strength is 110.840.

That is, when the dequantization after quantization, the retraining, and the quantization are viewed as one epoch, if iteration if performed, the error rate of quantization is gradually decreased, so that a connection strength with high accuracy may be obtained.

Referring to the graph of FIG. 5, this would be more clear.

In the graph of FIG. 5, when the dequantization after quantization, the retraining, and the quantization are viewed as one epoch, the x-axis denotes the number of times that iteration is performed, and the y-axis denotes the error rate of the quantized connection strength.

As illustrated in FIG. 5, when compared to the accuracy at the first quantization of the connection strength, the error rate of the connection strength is gradually decreased when performing iteration of dequantization after quantization, retraining, and quantization.

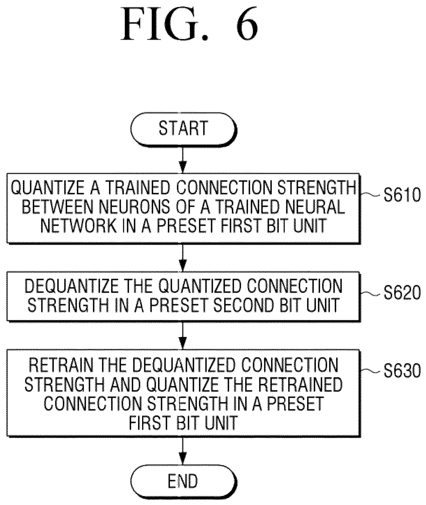

FIG. 6 is a flowchart illustrating a method for controlling of an electronic apparatus according to an embodiment.

According to an embodiment, the electronic apparatus may quantize a trained connection strength between neurons of a trained neural network in a preset first bit unit in operation S610.

As described above, quantization may be performed using Greedy approximation, but is not limited thereto.

The electronic apparatus may dequantize the quantized connection strength in preset second bit units in operation S620.

The electronic apparatus may retrain the dequantized connection strength in operation and may quantize the retrained connection strength in a preset first bit unit in operation S630.

The electronic apparatus may iterate the dequantization after quantization, the retraining, and the quantization described above in a preset time unit.

The electronic apparatus may store the deep neural network quantized in preset first bit units in the memory.

As such, by quantizing the connection strength, the present electronic apparatus may lighten the deep neural network. Accordingly, a problem that the time for deriving the output value is delayed can be overcome, and an artificial intelligence model can be used in a mobile device such as a smart phone or the like.

As the electronic apparatus dequantizes the quantized connection strength, retrains the dequantized connection strength, and then quantizes the connection strength again, the finally quantized connection strength is at a high degree to match the initial connection strength. Accordingly, the artificial intelligence model can be lightened, thereby not causing performance degradation.

A non-transitory computer readable medium which stores a program for sequentially executing a method for controlling an electronic apparatus according to an embodiment may be provided.

The non-transitory computer readable medium refers to a medium that stores data semi-permanently, and is readable by an apparatus. Specifically, the above-described various applications or programs may be stored in the non-transitory computer readable medium such as a compact disc (CD), a digital versatile disk (DVD), a hard disk, a Blu-ray disk, a universal serial bus (USB), a memory card, a ROM or etc., and may be provided.

The foregoing example embodiments and advantages are merely examples and are not to be construed as limiting. The present teaching can be readily applied to other types of apparatuses. Also, the description of the example embodiments is intended to be illustrative, and not to limit the scope of the claims.

The invention is set out in the appended claims.

**Claims**

1. An electronic apparatus (100) comprising:

   a communicator;
   a memory (110); and
   a processor (120) configured to quantize a neural network including a plurality of layers each of which includes a plurality of neurons, to generate a quantized neural network in order to reduce a size of the neural network, and store the quantized neural network in the memory (110), wherein the processor (120) is configured to:

   after initial training process of the neural network is finished, quantize, in a preset first bit precision, initially trained connection strengths between the neurons of an initially trained neural network,
   **characterized in that** the processor (120) is configured to:

   dequantize the quantized connection strengths in a preset second bit precision,
   retrain the dequantized connection strengths,
   quantize the retrained connection strengths in the preset first bit precision,
   wherein the initially trained neural network is trained by the initial training process, wherein the preset second bit precision is a same unit as the bit precision of the first trained connection strengths before being quantized,
   wherein the processor (120) is further configured to:

   after the quantization of the initially trained connection strengths, iteratively perform dequantization, retraining, and quantization,
   calculate a test error rate of the initially trained connection strength,
   calculate a test error rate of quantizing the retrained connection strength, wherein the test error rate is a difference between the connection strength before quantization obtained by training in the preset second bit precision and the quantized connection strength in the preset first bit precision,
when the test error rate of quantization is within a preset range of the test error rate of the initially trained connection strength, stop the iterative operation, wherein the processor (120) is configured to control the communicator to transmit, to an external device, a neural network in which the retrained connection strengths is quantized in the preset first bit precision,
wherein the external device is a mobile device of which memory capacity is more limited than the memory capacity of the electronic apparatus,
wherein the connection strengths between the neurons are weights assigned to synapses by which the neurons of neighboring layers are connected,
wherein the preset first bit precision is smaller than the bit precision of the initially trained connection strengths,
wherein the processor is configured to dequantize the quantized connection strengths to full precision, the full precision being composed of the bit precision of the initially trained connection strengths,
wherein the preset first bit precision is one bit, and the preset second bit precision is 32 bits.

2. The electronic apparatus (100) of claim 1, wherein the processor (120) is configured to perform the quantization using Equation 1 below and perform the dequantization using Equation 2 below:

   [Equation 1]

   $$\min_{\{a_i, b_i\}_{i=1}^{k}} \left\| w - \sum_{i=1}^{k} a_i b_i \right\|^2$$

   (w=connection strength, a = optimal coefficient, b = (-1 or +1), k > 1)

[Equation 2]

$$\sum_{i=1}^{k} a_i\, b_i$$

(a = optimal coefficient, b = (-1 or +1),k > 1)

3. A method of controlling an electronic apparatus (100) to quantize a neural network including a plurality of layers each of which includes a plurality of neurons, to generate a quantized neural network in order to reduce a size of the neural network, and to store the quantized neural network, the method comprising:

after initial training process of the neural network is finished, quantizing, in a preset first bit precision, initially trained connection strengths between the neurons of an initially trained neural network; and
storing the neural network including the quantized connection strengths;
wherein the quantizing further comprising:

dequantizing the quantized connection strengths in a preset second bit precision;
retraining the dequantized connection strengths; quantizing the retrained connection strengths in the preset first bit precision;
performing dequantization, retraining, and quantization iteratively;
wherein the initially trained neural network is trained by the training process,
wherein the preset second bit precision is a same unit as the bit precision of the first trained connection strengths before being quantized,
wherein the iteratively performing comprises,
calculating a test error rate of the initially trained connection strength;
calculating a test error rate of quantizing the retrained connection strength, wherein the test error rate is a difference between the retrained connection strength before quantization obtained by training in the preset second bit precision and the quantized connection strength in the preset first bit precision; and
when the test error rate of quantization is within a preset range of the test error rate of the initially trained connection strength, stopping the iterative operation
transmitting, to an external device, a neural network in which the retrained connection strengths is quantized in the preset first bit precision,
wherein the external device is a mobile device of which memory capacity is more limited than the memory capacity of the electronic apparatus,
wherein the connection strengths between the neurons are weights assigned to synapses by which the neurons of neighboring layers are connected,
wherein the preset first bit precision is smaller than the bit precision of the first trained connection strengths,
wherein the processor is configured to dequantize the quantized connection strengths to full precision, the full precision being composed of the bit precision of the first trained connection strengths,
wherein the preset first bit precision is one bit, and the preset second bit precision is 32 bits.

4. The method of claim 3, wherein the quantizing is performed using Equation 1 below and the dequantizing is performed using Equation 2 below:

[Equation 1]

$$\min_{\{a_i, b_i\}_{i=1}^{k}} \left\| w - \sum_{i=1}^{k} a_i\, b_i \right\|^2$$

(w=connection strength, a = optimal coefficient, b = (-1 or +1), k > 1)

[Equation 2]

$$\sum_{i=1}^{k} a_i\, b_i$$

(a = optimal coefficient, b = (-1 or +1), k > 1)

**Patentansprüche**

1. Elektronische Einrichtung (100), umfassend:

einen Kommunikator;
einen Speicher (110); und
einen Prozessor (120), der dazu konfiguriert ist, ein neuronales Netzwerk zu quantisieren, das eine Vielzahl von Schichten beinhaltet, von denen jede eine Vielzahl von Neuronen beinhaltet, um ein quantisiertes neuronales Netzwerk zu erzeugen, um eine Größe des neuronalen Netzwerks zu reduzieren, und das quantisierte neuronale Netzwerk in dem Speicher (110) zu speichern,

wobei der Prozessor (120) zu Folgendem konfiguriert ist: nachdem anfänglicher Trainingsprozess des neuronalen Netzwerks abgeschlossen ist, Quantisieren, in einer voreingestellten ersten Bitpräzision, von anfänglich trainierten Verbindungsstärken zwischen den Neuronen eines anfänglich trainierten neuronalen Netzwerks, **dadurch gekennzeichnet, dass** der Prozessor (120) zu Folgendem konfiguriert ist:

Dequantisieren der quantisierten Verbindungsstärken in einer voreingestellten zweiten Bitpräzision,
Neutrainieren der dequantisierten Verbindungsstärken,
Quantisieren der neu trainierten Verbindungsstärken in der voreingestellten ersten Bitpräzision,
wobei das anfänglich trainierte neuronale Netzwerk durch den anfänglichen Trainingsprozess trainiert wird, wobei die voreingestellte zweite Bitpräzision eine gleiche Einheit wie die Bitpräzision der ersten trainierten Verbindungsstärken ist, bevor sie quantisiert werden,
wobei der Prozessor (120) ferner zu Folgendem konfiguriert ist:

nach der Quantisierung der anfänglich trainierten Verbindungsstärken, iteratives Durchführen von Dequantisierung, Neutrainieren und Quantisierung,
Berechnen einer Testfehlerrate der anfänglich trainierten Verbindungsstärke,
Berechnen einer Testfehlerrate des Quantisierens der neu trainierten Verbindungsstärke, wobei die Testfehlerrate eine Differenz zwischen der Verbindungsstärke vor Quantisierung, die durch Training in der voreingestellten zweiten Bitpräzision erhalten wird, und der quantisierten Verbindungsstärke in der voreingestellten ersten Bitpräzision ist,
wenn die Testfehlerrate der Quantisierung innerhalb eines voreingestellten Bereichs der Testfehlerrate der anfänglich trainierten Verbindungsstärke ist, Stoppen des iterativen Betriebs, wobei der Prozessor (120) dazu konfiguriert ist, den Kommunikator zu steuern, um an eine externe Vorrichtung ein neuronales Netzwerk zu übertragen, in dem die neu trainierten Verbindungsstärken in der voreingestellten ersten Bitpräzision quantisiert werden,
wobei die externe Vorrichtung eine mobile Vorrichtung ist, deren Speicherkapazität begrenzter als die Speicherkapazität der elektronischen Einrichtung ist,
wobei die Verbindungsstärken zwischen den Neuronen Gewichte sind, die Synapsen zugewiesen sind, durch welche die Neuronen von benachbarten Schichten verbunden sind,
wobei die voreingestellte erste Bitpräzision kleiner als die Bitpräzision der anfänglich trainierten Verbindungsstärken ist,
wobei der Prozessor dazu konfiguriert ist, die quantisierten Verbindungsstärken auf volle Präzision zu dequantisieren, wobei sich die volle Präzision aus der Bitpräzision der anfänglich trainierten Verbindungsstärken zusammensetzt,
wobei die voreingestellte erste Bitpräzision ein Bit ist und die voreingestellte zweite Bitpräzision 32 Bit ist.

2. Elektronische Einrichtung (100) nach Anspruch 1, wobei der Prozessor (120) dazu konfiguriert ist, die Quantisierung unter Verwendung von Gleichung 1 unten durchzuführen und die Dequantisierung unter Verwendung von Gleichung 2 unten durchzuführen:

[Gleichung 1]

$$\min_{\{a_i,b_i\}_{i=1}^{k}} \left\| w - \sum_{i=1}^{k} a_i b_i \right\|^2$$

(w = Verbindungsstärke, a = optimaler Koeffizient, b = (-1 oder +1), k > 1)

[Gleichung 2]

$$\sum_{i=1}^{k} a_i b_i$$

(a = optimaler Koeffizient, b = (-1 oder +1), k > 1).

3. Verfahren zum Steuern einer elektronischen Einrichtung (100), um ein neuronales Netzwerk zu quantisieren, das eine Vielzahl von Schichten beinhaltet, von denen jede eine Vielzahl von Neuronen beinhaltet, um ein quantisiertes neuronales Netzwerk zu erzeugen, um eine Größe des neuronalen Netzwerks zu reduzieren, und um das quantisierte neuronale Netzwerk zu speichern, wobei das Verfahren Folgendes umfasst:

nachdem anfänglicher Trainingsprozess des neuronalen Netzwerks abgeschlossen ist, Quantisieren, in einer voreingestellten ersten Bitpräzision, von anfänglich trainierten Verbindungsstärken zwischen den Neuronen eines anfänglich trainierten neuronalen Netzwerks; und

Speichern des neuronalen Netzwerks, das die quantisierten Verbindungsstärken beinhaltet;

wobei das Quantisieren ferner Folgendes umfasst:

Dequantisieren der quantisierten Verbindungsstärken in einer voreingestellten zweiten Bitpräzision;

Neutrainieren der dequantisierten Verbindungsstärken;

Quantisieren der neu trainierten Verbindungsstärken in der voreingestellten ersten Bitpräzision;

iteratives Durchführen von Dequantisierung, Neutrainieren und Quantisierung;

wobei das anfänglich trainierte neuronale Netzwerk durch den Trainingsprozess trainiert wird,

wobei die voreingestellte zweite Bitpräzision eine gleiche Einheit wie die Bitpräzision der ersten trainierten Verbindungsstärken ist, bevor sie quantisiert werden,

wobei das iterative Durchführen Folgendes umfasst,

Berechnen einer Testfehlerrate der anfänglich trainierten Verbindungsstärke;

Berechnen einer Testfehlerrate des Quantisierens der neu trainierten Verbindungsstärke, wobei die Testfehlerrate eine Differenz zwischen der neu trainierten Verbindungsstärke vor Quantisierung, die durch Training in der voreingestellten zweiten Bitpräzision erhalten wird, und der quantisierten Verbindungsstärke in der voreingestellten ersten Bitpräzision ist; und

wenn die Testfehlerrate der Quantisierung innerhalb eines voreingestellten Bereichs der Testfehlerrate der anfänglich trainierten Verbindungsstärke ist, Stoppen des iterativen Betriebs,

Übertragen, an eine externe Vorrichtung, eines neuronalen Netzwerks, in dem die neu trainierten Verbindungsstärken in der voreingestellten ersten Bitpräzision quantisiert werden,

wobei die externe Vorrichtung eine mobile Vorrichtung ist, deren Speicherkapazität begrenzter als die Speicherkapazität der elektronischen Einrichtung ist,

wobei die Verbindungsstärken zwischen den Neuronen Gewichte sind, die Synapsen zugewiesen sind, durch welche die Neuronen von benachbarten Schichten verbunden sind,

wobei die voreingestellte erste Bitpräzision kleiner als die Bitpräzision der ersten trainierten Verbindungsstärken ist,

wobei der Prozessor dazu konfiguriert ist, die quantisierten Verbindungsstärken auf volle Präzision zu dequantisieren, wobei die volle Präzision aus der Bitpräzision der ersten trainierten Verbindungsstärken zusammengesetzt ist,

wobei die voreingestellte erste Bitpräzision ein Bit ist und die voreingestellte zweite Bitpräzision 32 Bit ist.

4. Verfahren nach Anspruch 3, wobei das Quantisieren unter Verwendung von Gleichung 1 unten durchgeführt wird und das Dequantisieren unter Verwendung von Gleichung 2 unten durchgeführt wird:

[Gleichung 1]

$$\min_{\{a_i,b_i\}_{i=1}^{k}} \left\| w - \sum_{i=1}^{k} a_i b_i \right\|^2$$

(w = Verbindungsstärke, a = optimaler Koeffizient, b = (-1 oder +1), k > 1)

[Gleichung 2]

$$\sum_{i=1}^{k} a_i b_i$$

(a = optimaler Koeffizient, b = (-1 oder +1), k > 1).

**Revendications**

1. Appareil électronique (100) comprenant :

un dispositif de communication ;
une mémoire (110) ; et
un processeur (120) configuré pour quantifier un réseau neuronal comprenant une pluralité de couches, chacune d'elles comprenant une pluralité de neurones, pour générer un réseau neuronal quantifié afin de réduire une taille du réseau neuronal, et stocker le réseau neuronal quantifié dans la mémoire (110), ledit processeur (120) étant configuré pour :

une fois le processus de formation initial du réseau neuronal terminé, quantifier, avec une première précision de bit prédéfinie, des forces de connexion initialement formées entre les neurones d'un réseau neuronal initialement formé, **caractérisé en ce que** le processeur (120) est configuré pour :

déquantifier les forces de connexion quantifiées avec une seconde précision de bit prédéfinie, reformer les forces de connexion déquantifiées, quantifier les forces de connexion reformées avec la première précision de bit prédéfinie, ledit réseau neuronal initialement formé étant formé par le processus de formation initial, ladite seconde précision de bit prédéfinie étant une même unité que la précision de bit des premières forces de connexion formées avant d'être quantifiées, le processeur (120) étant en outre configuré pour :

après la quantification des forces de connexion initialement formées, réaliser de manière itérative la déquantification, la reformation et la quantification, calculer un taux d'erreur d'essai de la force de connexion initialement formée, calculer un taux d'erreur d'essai de quantification de la force de connexion reformée, ledit taux d'erreur d'essai étant une différence entre la force de connexion avant quantification obtenue par la formation avec la seconde précision de bit prédéfinie et la force de connexion quantifiée avec la première précision de bit prédéfinie, lorsque le taux d'erreur d'essai de quantification se trouve dans une plage prédéfinie du taux d'erreur d'essai de la force de connexion initialement formée, arrêter l'opération itérative, ledit processeur (120) étant configuré pour commander le dispositif de communication afin de transmettre, à un dispositif externe, un réseau neuronal dans lequel les forces de connexion reformées sont quantifiées avec la première précision de bit prédéfinie, ledit dispositif externe étant un dispositif mobile dont la capacité de mémoire est plus limitée que la capacité de mémoire de l'appareil électronique, lesdites forces de connexion entre les neurones étant des poids attribués à des synapses au moyen desquelles les neurones des couches voisines sont connectés, ladite première précision de bit prédéfinie étant inférieure à la précision de bit des forces de connexion initialement formées, ledit processeur étant configuré pour déquantifier les forces de connexion quantifiées avec une précision totale, la précision totale étant composée de la précision de bit des forces de connexion initialement formées, ladite première précision de bit prédéfinie étant d'un bit, et ladite seconde précision de bit prédéfinie étant de 32 bits.

2. Appareil électronique (100) de la revendication 1, ledit processeur (120) étant configuré pour réaliser la quantification à l'aide de l'équation 1 ci-dessous et réaliser la déquantification à l'aide de l'équation 2 ci-dessous :

[Équation 1]

$$\min_{\{a_i,b_i\}_{i=1}^{k}} \left\| w - \sum_{i=1}^{k} a_i\, b_i \right\|^2$$

(w = force de connexion, a = coefficient optimal, b = (-1 ou +1), k > 1)

[Equation 2]

$$\sum_{i=1}^{k} a_i\, b_i$$

(a = coefficient optimal, b = (-1 ou +1), k > 1).

3. Procédé de commande d'un appareil électronique (100) pour quantifier un réseau neuronal comprenant une pluralité de couches, chacune d'elles comprenant une pluralité de neurones, pour générer un réseau neuronal quantifié afin de réduire une taille du réseau neuronal, et pour stocker le réseau neuronal quantifié, le procédé comprenant :

une fois le processus d'entraînement initial du réseau neuronal terminé, la quantification, avec une première précision de bit prédéfinie, de forces de connexion initialement formées entre les neurones d'un réseau neuronal initialement formé ; et
le stockage du réseau neuronal comprenant les forces de connexion quantifiées ;
ladite quantification comprenant en outre :

la déquantification des forces de connexion quantifiées avec une seconde précision de bit prédéfinie ;
la formation des forces de connexion déquantifiées ; la quantification des forces de connexion reformées avec la première précision de bit prédéfinie ;
la réalisation de la déquantification, la formation et la quantification de manière itérative ;

ledit réseau neuronal initialement formé étant formé par le processus de formation, ladite seconde précision de bit prédéfinie étant une même unité que la première précision de bit des premières forces de connexion formées avant d'être quantifiées, ladite exécution itérative comprenant le calcul d'un taux d'erreur d'essai de la force de connexion initialement formée ;

le calcul d'un taux d'erreur d'essai de quantification de la force de connexion reformée, ledit taux d'erreur d'essai étant une différence entre la force de connexion reformée avant quantification obtenue par la formation avec la seconde précision de bit prédéfinie et la force de connexion quantifiée avec la première précision de bit prédéfinie ; et

lorsque le taux d'erreur d'essai de quantification se trouve dans une plage prédéfinie du taux d'erreur d'essai de la force de connexion initialement formée, l'arrêt de l'opération itérative, la transmission, à un dispositif externe, d'un réseau neuronal dans lequel les forces de connexion reformées sont quantifiées avec la première précision de bit prédéfinie, ledit dispositif externe étant un dispositif mobile dont la capacité de mémoire est plus limitée que la capacité de mémoire de l'appareil électronique, lesdites forces de connexion entre les neurones étant des poids attribués à des synapses au moyen desquelles les neurones des couches voisines sont connectés, ladite première précision de bit prédéfinie étant inférieure à la précision de bit des premières forces de connexion formées, ledit processeur étant configuré pour déquantifier les forces de connexion quantifiées avec une précision totale, la précision totale étant composée de la précision de bit des premières forces de connexion formées, ladite première précision de bit prédéfinie étant d'un bit, et ladite seconde précision de bit prédéfinie étant de 32 bits.

4. Procédé de la revendication 3, ladite quantification étant réalisée à l'aide de l'équation 1 ci-dessous et ladite déquantification étant réalisée à l'aide de l'équation 2 ci-dessous :

[Équation 1]

$$\min_{\{a_i,b_i\}_{i=1}^{k}} \left\| w - \sum_{i=1}^{k} a_i b_i \right\|^2$$

(w = force de connexion, a = coefficient optimal, b = (-1 ou +1), k > 1)

[Equation 2]

$$\sum_{i=1}^{k} a_i b_i$$

(a = coefficient optimal, b = (-1 ou +1), k > 1).

# FIG. 1

100

110

120

MEMORY ←→ PROCESSOR

# FIG. 2

Quantization

Quantize the Trained Weights

⇩

Generate Quantized Weights

⇩

Dequantize the Quantized Weights

⇩

Retrain the Dequantized Weights

# FIG. 3

# FIG. 4

| perplexity | | | |
|---|---|---|---|
| original | 1bits_quant | retrain | retrain epoch |
| 114.191 | 426.868 | 117.765 | 1 |
| 117.765 | 202.975 | 116.399 | 2 |
| 116.399 | 158.042 | 115.580 | 3 |
| 115.580 | 142.820 | 114.960 | 4 |
| 114.960 | 135.905 | 114.469 | 5 |
| 114.469 | 132.070 | 114.055 | 6 |
| 114.055 | 129.554 | 113.691 | 7 |
| 113.691 | 127.746 | 113.351 | 8 |
| 113.351 | 126.335 | 113.072 | 9 |
| 113.072 | 125.223 | 112.815 | 10 |
| 112.815 | 124.261 | 112.583 | 11 |
| 112.583 | 123.442 | 112.371 | 12 |
| 112.371 | 122.719 | 112.205 | 13 |
| 112.205 | 122.126 | 112.035 | 14 |
| 112.035 | 121.567 | 111.896 | 15 |
| 111.896 | 121.101 | 111.742 | 16 |
| 111.742 | 120.664 | 111.639 | 17 |
| 111.639 | 120.269 | 111.519 | 18 |
| 111.519 | 119.888 | 111.427 | 19 |
| 111.427 | 119.565 | 111.348 | 20 |
| 111.348 | 119.279 | 111.258 | 21 |
| 111.258 | 119.008 | 111.182 | 22 |
| 111.182 | 118.745 | 111.121 | 23 |
| 111.121 | 118.524 | 111.088 | 24 |
| 111.088 | 118.324 | 111.035 | 25 |
| 111.035 | 118.123 | 110.984 | 26 |
| 110.984 | 117.945 | 110.935 | 27 |
| 110.935 | 117.789 | 110.902 | 28 |
| 110.902 | 117.627 | 110.882 | 29 |
| 110.882 | 117.474 | 110.867 | 30 |
| 110.867 | 117.362 | 110.850 | 31 |
| 110.850 | 117.246 | 110.836 | 32 |
| 110.836 | 117.116 | 110.820 | 33 |
| 110.820 | 117.042 | 110.825 | 34 |
| 110.825 | 116.935 | 110.840 | 35 |

# FIG. 5

# FIG. 6

START

QUANTIZE A TRAINED CONNECTION STRENGTH BETWEEN NEURONS OF A TRAINED NEURAL NETWORK IN A PRESET FIRST BIT UNIT — S610

DEQUANTIZE THE QUANTIZED CONNECTION STRENGTH IN A PRESET SECOND BIT UNIT — S620

RETRAIN THE DEQUANTIZED CONNECTION STRENGTH AND QUANTIZE THE RETRAINED CONNECTION STRENGTH IN A PRESET FIRST BIT UNIT — S630

END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZHOU SHUCHANG**. *IQNN: Training Quantized Neural Networks with Iterative Optimizations*, 25 October 2017
- **JI ZHENGPING**. *Reducing weight precision of convolutional neural networks towards large-scale on-chip image recognition*, 20 May 2015
- **PILIPOVIC RATKO**. *Compression of convolutional neural networks: A short survey*, 21 March 2018
- **HAO LI**. *Towards a Deeper Understanding of Training Quantized Neural Networks*, 01 August 2017